# EUROPEAN PATENT APPLICATION

(11) **EP 3 683 693 A1**
(43) Date of publication of application: **22.07.2020**
(21) Application number: 17924267.2
(22) Date of filing: 11.09.2017
(51) Int. Cl.: G06F 16/00, G06F 16/30, G06Q 10/08

(54) **DEVICE FOR IDENTIFYING SAMPLE CATEGORY, ANALYTICAL SYSTEM, AND ANALYTICAL NETWORK SYSTEM**

(71) Applicant: Shimadzu Corporation, Kyoto-shi, Kyoto 604-8511 (JP)
(72) Inventor: SUZUKI, Keijiro, Kyoto-shi Kyoto 604-8511 (JP)
(74) Representative: Müller-Boré & Partner Patentanwälte PartG mbB
(86) International application number: PCT/JP2017/032607
(87) International publication number: WO 2019/049354

(57) **Abstract**

In a device used to identify a category to which a target sample belongs from among a plurality of categories for classifying samples, criteria being set for each of the plurality of categories, the device includes a storage unit 21 configured to store a database 211 in which one or a plurality of terms related to criteria determined in advance for each of the plurality of categories are associated with each of the plurality of categories, a target sample information input reception unit 24 configured to receive an input of target sample information which is linguistic information including a term that characterizes the target sample, a category candidate extraction unit 26 configured to compare a term included in the target sample information with the one or a plurality of terms corresponding to each of the plurality of categories to extract candidates of categories to which the target sample belongs from among the plurality of categories based on a degree of match, and a category candidate presentation unit 27 configured to present extracted category candidates to a user.

## Description

### Technical Field

The present invention relates to a device for identifying a category to which a target sample belongs to determine criteria for comparing measurement data of the target sample from criteria predetermined for each of a plurality of categories for classifying a sample. The present invention also relates to an analysis system and an analysis network system equipped with such a device.

### Background of the Invention

In recent years, various criteria have been set in each country and region to prevent products including hazardous substances from being imported to and distributed in their own countries (or regions). As one of such criteria, there is a directive called the European Union (EU)'s RoHS (Restriction of Hazardous Substances) Directive. In the RoHS Directive, it is set such that the use of six types of hazardous substances, i.e., lead, mercury, cadmium, hexavalent chromium, PBB (polybrominated biphenyl), and PBDE (polybrominated diphenyl ether), for various types of electric and electronic equipment is prohibited. There also is an exclusion rule in cases where there is no alternative other than using hazardous substances as described above. The exclusion rule defines an allowable content of the hazardous substance. Manufacturers of electric and electronic equipment to be exported to the European Union are required to prove that the equipment meets the requirements of the RoHS Directive. Therefore, when manufacturing such electric and electronic equipment, an analyst quantifies the amount of the above-mentioned harmful substances included in various materials using an analysis device, such as, e.g., a fluorescent X-ray analysis device to confirm, when the harmful substances are included, that the amount meets the exclusion rule specified in the category to which the equipment belongs (see, for example, Patent Document 1).

Conventionally, when an analyst performs the above-mentioned work, the above-mentioned harmful substances included in various materials are first quantified in order, and the results are stored together with the names, etc., of the materials. After completion of the measurements of all the materials, the quantitative values of the hazardous substance are read out in order, and the pass or failure of the material is determined by collating the quantitative value with the allowable amount described in the exclusion rule of the RoHS Directive.

### Prior Art Document

### Patent Document

Patent Document 1: Japanese Unexamined Patent Application Publication No. 2013-217915

### Non-Patent Document

**Non-Patent Document 1:** "Japanese Morphological Analysis", [online], metro-bb.com, [Searched on April 14, 2017], Internet <URL: http://tools.metro-bb.com/api/keitaiso>
**Non-Patent Document 2:** "Text-processing Tools Key Phrase Extract", [online], [Searched on April 14, 2017], Internet URL: http://so-zou.jp/web-app/text/key-phrase/

### SUMMARY OF THE INVENTION

### Problems to be Solved by the Invention

In the RoHS Directive, electric and electronic equipment is classified into detailed categories, and the details of the exclusion rule, i.e., types of hazardous substances and allowable contents of the hazardous substances, differ in each category. For this reason, an analyst has to find out the category to which the electric/electronic equipment in which the material is used belongs for each material, and confirm the exclusion rule described for the category to determine the pass or failure of the material. This is a great burden for the analyst.

Although the RoHS Directive has been described here as an example, in addition to this, various criteria, such as, e.g., the ELV (End of Life Vehicles) command and the REACH (Registration, Evaluation, Authorization and Restriction of Chemicals), have been stipulated regarding the use, etc., of hazardous substances, and there have been the same problems as described above when they are collated with the criteria. In addition to the determination of the content of hazardous substances included in materials, for example, even in the case of comparing measurement data obtained by sampling and analyzing a part of a product with predetermined criteria to confirm that a product manufactured in a factory, etc., is a good product satisfying the predetermined criteria, there are similar problems in the operation of confirming a product corresponding to the product from among a plurality of criteria determined for each category of the product.

Note that in the following description, not only a category that defines a sample (material, etc.) itself but also a category that defines a product, etc., in which a sample (material, etc.) is used like the RoHS Directive (i.e., a category in which a sample is indirectly defined) are referred to as the "category for classifying a sample".

An object sought to be solved by the present invention is to provide a sample category identification device capable of reducing a burden on an analyst when identifying a category to which a target sample belongs from a plurality of categories for classifying a sample, criteria being set for each of the categories.

### Means for Solving the Problem

A sample category identification device made to solve the above-mentioned problems according to the present invention is a sample category identification device used to identify a category to which a target sample belongs from among a plurality of categories for classifying a sample, criteria being set for each of the plurality of categories, the sample category identification device includes:
a) a storage unit configured to store a database in which one or a plurality of terms related to criteria determined in advance for each of the plurality of categories are associated with each of the plurality of categories;
b) a target sample information input reception unit configured to receive an input of target sample information which is linguistic information including a term that characterizes the target sample;
c) a category candidate extraction unit configured to compare the term included in the target sample information with the one or a plurality of terms corresponding to each of the plurality of categories to extract candidates of categories to which the target sample belongs from among the plurality of categories based on a degree of match; and
d) a category candidate presentation unit configured to present extracted category candidates to a user.

The target sample information may be either one word or a set of words, or may be a sentence composed of a plurality of words. Note that the "word" includes not only an ordinary word classified into a noun, a verb, etc., which are components of ordinary languages, but also a numeric value, a chemical formula of a substance, and the like. The category candidate extraction unit can extract candidates of categories to which the target sample belongs from the plurality of categories by obtaining the degree of match by collating the word with a plurality of terms corresponding to each of a plurality of categories when the word is input and by obtaining how many the plurality of terms is included in a sentence when the sentence is input.

In the sample category identification device according to the present invention, for each of the plurality of categories, the category to which the target sample belongs is specified by using a database associated with one or a plurality of terms related to the criteria determined in advance for categories. When a user inputs linguistic information (target sample information) including terms that characterize the target sample, the category candidate extraction unit determines the degree of match between the terms included in the target sample information and one or a plurality of terms associated with each category, as described above, and extracts candidates of categories to which the target sample belongs. The category candidate presentation unit then presents the candidates to the user. This device reduces the burden on the user (analyst) because candidates of categories to which the target sample belongs are presented only by the input of the sample information by the user.

The sample category identification device according to the present invention further includes:
e) a criteria information input reception unit configured to receive an input of criteria information which is linguistic information in which predetermined criteria are described for one category;
f) a morphological analysis unit configured to extract one or a plurality of terms from the criteria information by performing a morpheme analysis of the criteria information; and
g) a database storage unit configured to store the extracted one or plurality of terms associated with the one category in the database.

The criteria information may be either one term or a set of terms, or may be a sentence composed of them by a predetermined syntactic method. When one term or a set of terms is input, the morphological analysis unit stores them in the database as they are. When a sentence is input, the morphological analysis unit performs the morphological analysis of the sentence to extract a plurality of terms and store them in the database.

The sentence in which predetermined criteria are described for one category is, for example, "less than 30 *WI* light bulb type and compact type (small size) fluorescent lamp for general illumination application, and the mercury content does not exceed 5 mg/burner" described in the RoHS Directive. In the aforementioned device, a plurality of words is extracted by performing the morphological analysis. In this instance, the morphological analysis generates words, such as, e.g., "general", "illumination", "application", "30", "less", "light bulb", etc. The generated plurality of words is stored in the database in association with the category. For the morphological analysis, for example, software, such as, e.g., "ChaSen" or "MeCab", or an algorithm similar to the software thereof can be used.

In the sample category identification device described above, a database is automatically generated by inputting sentences in which criteria are written in order for each category. In addition, newly formulated criteria can be easily added to the database in order.

In the sample category identification device described above, it is preferred that the morphological analysis unit extract only nouns and verbs from the criteria information.

Generally, when a sentence is subjected to a morphological analysis, words of various parts of speech, such as, a noun, a verb, an auxiliary verb, and an adverb, are generated. However, auxiliary verbs and adverbs hardly contribute to narrow down candidates of categories to which the sample belongs. As described above, by adopting the configuration in which the morphological analysis unit extracts only nouns and verbs to generate a word group, it is possible to reduce the number of words to be accommodated in the database, which makes it possible to speed up the process of comparing the sample information by the category candidate extraction unit with the word group of each category. Note that the noun herein includes a numeric value and a chemical formula of a substance.

Further, in the sample category identification device according to the present invention, as another aspect, it is preferable that the morphological analysis unit extract a key phrase from the criteria information.

As the software for extracting a key phrase from a sentence, for example, those described in Non-Patent Document 1 and Non-Patent Document 2 are conventionally known. In these software, for example, when a sentence "lead of up to 0.35 wt% included in a steel material and in a galvanized steel sheet as an alloy component for machining" is input, key phrases "in a galvanized steel sheet", "alloy component", "machining", "in a steel material", and "0.35 wt%" are extracted as key phrases in any software. By using such a key phrase, candidates of the category to which the sample belongs can be extracted with higher accuracy.

In the sample category identification device according to the present invention, it may be configured such that
the morphological analysis unit extracts a term composed of a combination of a numeric value, a unit of a physical quantity, and a predetermined term showing a magnitude relationship to the numeric value, included in the key phrase, and generates a formula based on them, and
the database generation unit generates a database by associating the formula with the one category.

The aforementioned predetermined term representing the magnitude relationship to the numeric value includes, for example, "less than," "equal to or less than," "smaller," "less," "not exceeding," "up to," "same," "equal," "many", "equal to or more than," "larger," and the like. When such a key phrase is included, the key phrase is converted into a formula and collated with the input keyword. For example, when there is a key phrase of "less than 30 W for general illumination application", this is converted into a formula, such as, e.g., "X< 30 W" (X is an input value of a user) to generate a database.

The term composed of a combination of a numeric value and a unit of a physical quantity, which is included in a sentence in which criteria of each category are described, is often a value that determines the category to which each target sample belongs, or a value that becomes a determination criteria of the pass or failure of the target sample in the category. When the aforementioned sample category identification device having a numeric value extracting unit is used, criteria values, which are criteria for a user to determine the pass or failure of the category or the sample to which the target sample belongs, can be confirmed at a glance, and the burden on a user is further reduced.

### Effects of the Invention

By using the sample category identification device according to the present invention, it is possible to reduce a burden on an analyst when identifying a category to which a target sample belongs from among a plurality of categories for classifying a sample, criteria being set for each of the sample categories.

### BRIEF DESCRIPTION OF THE DRAWINGS

FIG. 1 is a configuration diagram showing a main part of an example of a sample category identification device according to the present invention.
FIG. 2 is a diagram for explaining a sample category database according to the example.
FIG. 3 is an example showing an initial screen in the sample category identification device according to the example.
FIG. 4 is an example of an input screen of target sample information according to the sample category identification device of the example.
FIG. 5 is an example of a display screen of a category candidate according to the sample category identification device of the example.
FIG. 6 is an example of an input screen of determination criteria according to the sample category identification device of the example.
FIG. 7 is a configuration diagram showing the main part of an example of an analysis system according to the present invention.
FIG. 8 is an example of threshold values for use in a screening analysis by an energy-dispersive fluorescent X-ray analysis device.
FIG. 9 is an example of an initial screen according to an analysis system of an example.
FIG. 10 is an example of a display screen of a category candidate according to an analysis system of an example.
FIG. 11 is an example of a display screen of a determination result according to an analysis system of an example.
FIG. 12 is a configuration showing a main part of an example of an analysis network system according to the present invention.

### EMBODIMENTS FOR CARRYING OUT THE INVENTION

Examples of a sample category identification device, an analysis system, and an analysis network system according to the present invention will be described below.

The sample category identification device of this example is used to identify whether or not a target sample falls under any of categories specified in the exclusion rule for six types of hazardous substances: lead, mercury, cadmium, hexavalent chromium, PBB (polybiphenyl bromide), and PBDE (polybromide diphenyl ether), in the RoHS Directive. The exclusion rule of the RoHS Directive describes categories that classify electrical and electronic equipment, and materials (samples) used in manufacturing electrical and electronic equipment are indirectly classified into any category depending on the type of the electrical and electronic equipment. Hereinafter, a category that indirectly classifies a sample is also referred to as the "category for classifying a sample" as appropriate.

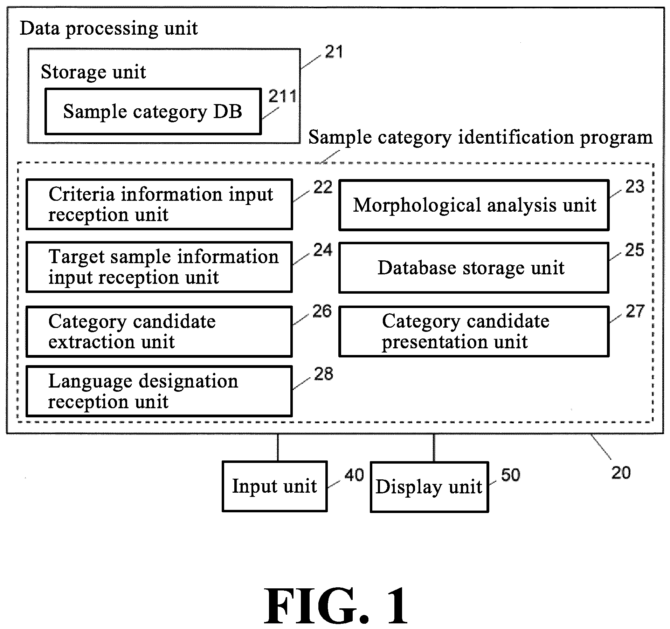

As shown in FIG. 1, the sample category identification device of this example includes a data processing unit 20, and an input unit 40 and a display unit 50 connected to the data processing unit 20. In addition to the storage unit 21, the data processing unit 20 is provided with, as functional blocks, a criteria information input reception unit 22, a morphological analysis unit 23, a target sample information input reception unit 24, a database storage unit 25, a category candidate extraction unit 26, a category candidate presentation unit 27, and a language designation reception unit 28. The entity of the data processing unit 20 is a personal computer, and these functional blocks are embodied by executing a sample category identification program installed in the computer.

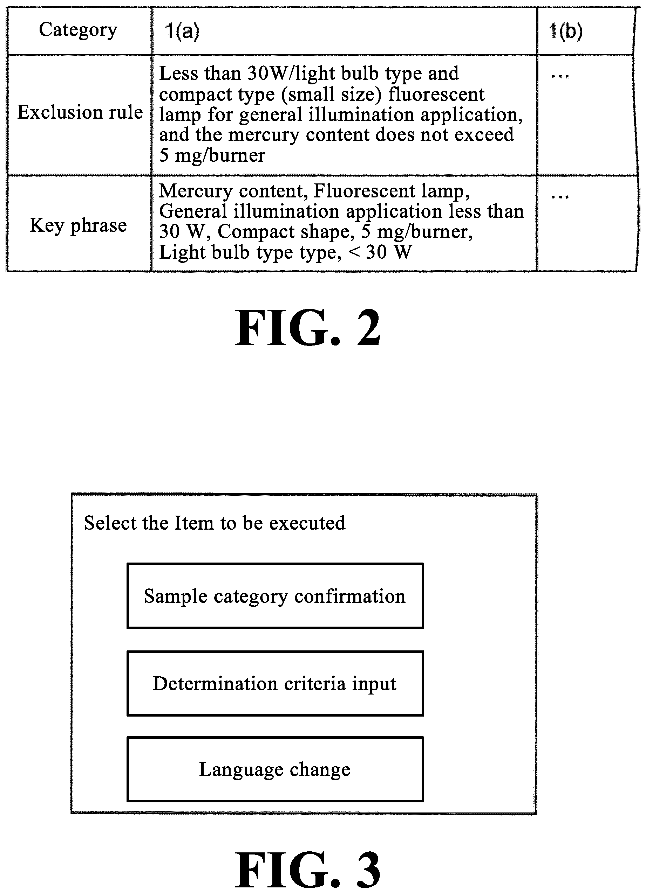

The sample category database 211 is stored in the storage unit 21. As shown in FIG. 2, the sample category database 211 is a table in which a plurality of categories for classifying materials corresponding to the exclusion rules of the RoHS Directive is associated with a sentence of the exclusion rule in a category and key phrases extracted from the sentence. Note that a formula included in the key phrase will be described later.

The operation of the sample category identification device of this example will be described below.

When a user runs the data-processing program, the initial screen as shown in FIG. 3 is displayed. Three buttons, i.e., "Sample category confirmation", "Determination criteria input", and "Language change", are displayed on the initial screen. The operation when these buttons are pressed will be described in order.

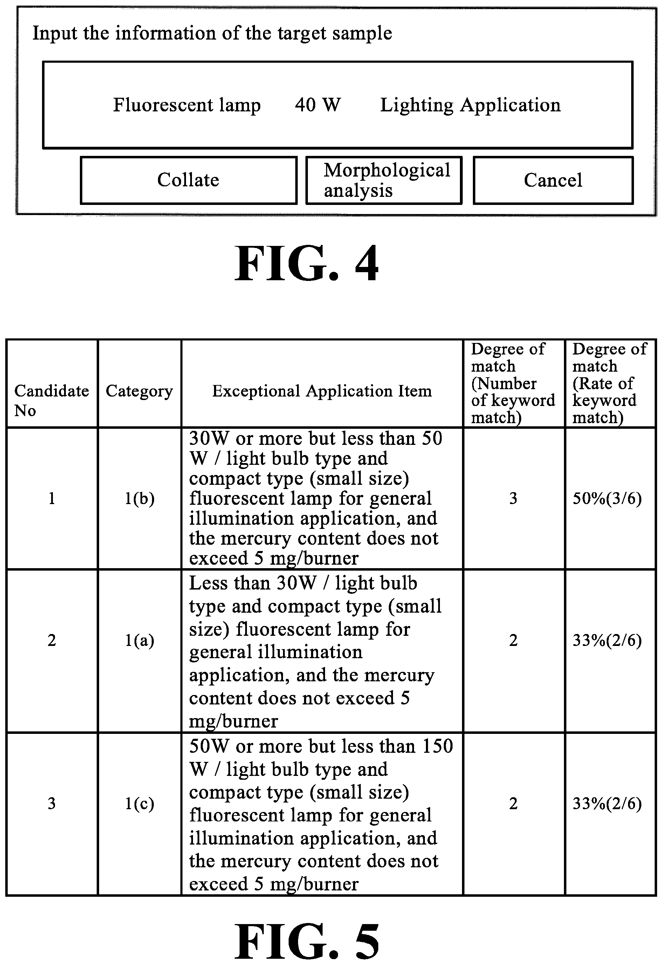

In the initial screen of FIG. 3, when the user presses the "Sample category confirmation" button, the target sample information input reception unit 24 displays a field in which the user is prompted to input the target sample information, which is linguistic information including terms that characterize the target sample (FIG. 4).

When the user inputs three keywords, i.e., "Fluorescent lamp", "40 W", and "Lighting Application" as the target sample information and presses the "Collate" button, the category candidate extraction unit 26 collates these three keywords with the key phrases of the sample category database 211 to extract the number of matches. Note that the term "match" herein includes not only a perfect match but also a partial match. When a keyword of "40 W" including a numeric value (40) and a unit of a physical quantity (W) is input as in this example, this keyword is not only collated with the key phrase as it is, but also the keyword is collated with a formula included in the key phrase. In this example, the keyword "40 W" input by the user is collated with a formula"< 30 W" included in the key phrase, and a match/mismatch is determined based on whether or not it is appropriate.

The category candidate extraction unit 26 collates the keywords input by the user with the key phrases (including formulas) of all categories and then extracts a predetermined number of categories in the order of higher degree of match. The extracted categories are displayed by the category candidate presentation unit 27 on the display unit 50 as candidates of the category to which the sample characterized by the keywords input by the user belongs. FIG. 5 shows an example of the display. In FIG. 5, both the number of keyword matches and the rate of keyword matches are shown as the degree of match, but only one of them may be used as the degree of match. Note that in cases where the length of the sentence of the exclusion rule (determination criterion) differs greatly depending on categories, even if the number of matches between the keywords input by the user and the key phrase is large, there is a case in which the category match rate is relatively low due to a large number of key phrases of the category. Therefore, in such a case, it is preferable to extract a predetermined number of categories based on the number of matches. Note that in the example of FIG. 5, the number of categories to be extracted is three, but the number may be appropriately changed by a user.

Further, when the user inputs linguistic information (target sample information) including a plurality of terms that characterize the target sample, such as, e.g., "40 W fluorescent lamp for general illumination application" and presses the "Morphological analysis" button, the morphological analysis unit 23 generates a plurality of words from this phrase. The category candidate extraction unit 26 collates the plurality of words generated by the morphological analysis unit 23 with the key phrases of the sample category database 211. Then, a predetermined number of categories is extracted in the order of higher degree of match.

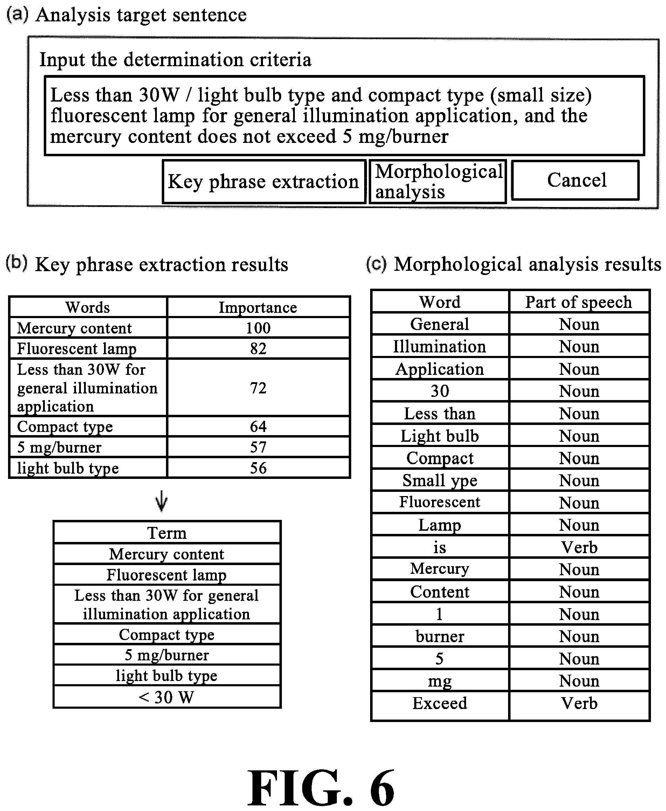

In the initial screen of FIG. 3, when a user presses the "Determination criteria input" button, the criteria information input reception unit 22 displays a window for allowing the user to input linguistic information of determination criteria (exclusion rules of the RoHS Directive or the like) as criteria information on the display unit 50 ((a) ofFIG. 6). Further, a button for allowing a user to select one of the two processes of "Key phrase extraction" and "Morphological analysis" is displayed. When a user presses "Extract key phrase", the key phrases are extracted from the criteria information by the morphological analysis unit 23 ((b) of FIG. 6). As the software for extracting key phrases from a sentence, for example, those described in Non-Patent Document 1 and Non-Patent Document 2 may be used.

Subsequently, the morphological analysis unit 23 checks whether or not there exists a term composed of a combination of a predetermined term showing a numeric value, a unit of a physical quantity, and a magnitude relationship for the numeric value in the key phrase, and generates a formula based on them when there exists. The "predetermined term" is, for example, "less than", "equal to or less than", "smaller", "less", "not exceeding", "up to", "same", "equal", "larger", "equal to or larger than", and the like. When such a key phrase is included, the key phrase is converted into a formula and collated with the input keyword. For example, in cases where there exists a key phrase of "less than 30 W for general illumination application", this is converted into a formula, such as "X< 30 W" (X is an input value of a user) to generate a database.

When a user presses the "Morphological analysis", the criteria information is subjected to a morphological analysis by the morphological analysis unit 23 and a plurality of words is extracted ((c) of FIG. 6). The plurality of key phrases and/or formulas (or words) thus obtained are stored in the sample category database 211 together with the pre-processing criteria information by the database storage unit 25.

In (c) of FIG. 6, a morphological analysis is performed to extract only nouns and verbs. A morphological analysis sentence generates words of various parts of speech, such as, e.g., a noun, a verb, an auxiliary verb, and an adverb. However, an auxiliary verb and an adverb hardly contribute to narrow down candidates of categories to which the sample belongs. As in this example, by adopting a configuration in which the morphological analysis unit extracts only nouns and verbs to generate a word group, it is possible to reduce the number of words to be accommodated in the database, and it is possible to speed up the process of comparing the sample information by the category candidate extraction unit with the word group of each category. Note that the noun described herein includes a numeric value, a chemical formula of a substance, etc. It is needless to say that a part-of-speech selection field or the like may be displayed so that a user can appropriately change the part-of-speech to be extracted at the time of the morphological analysis.

The "Language change" button in FIG. 3 is used to change the language used in this system from the default language (e.g., Japanese language). When a user presses this, several languages, such as, e.g., Japanese, English, Chinese, German, etc., are presented to the user. For example, when the user selects English, the language designation reception unit 28 translates the display on the screen into English, and also translates the information of the sample category database 211 into English for use in the above processes.

Next, an example of the analysis system according to the present invention will be explained.

In addition to the use of the sample category identification device of the aforementioned example, the analysis system 100 of this example can also be used to determine a pass or fail of the target sample by measuring the content of the aforementioned six types of hazardous substances included in the target sample and comparing, when the hazardous substances are included, the content with a threshold value specified in the exclusion rule of the RoHS Directive. Between the six hazardous substances, the contents of lead, mercury, cadmium, and hexavalent chromium are measured by a fluorescent X-ray analysis device (EDX), and the contents ofPBB (polybrominated biphenyl) and PBDE (polybrominated diphenyl ether) are measured by a gas chromatograph mass analysis device (Py-GCMS) equipped with a pyrolysis device (pyrolizer). For the precision quantitative analysis, an inductively coupled plasma (ICP) emission spectroscopy, an ultraviolet-visible spectrophotometer (UV), a gas chromatograph mass spectrometer (GCMS), and the like are used.

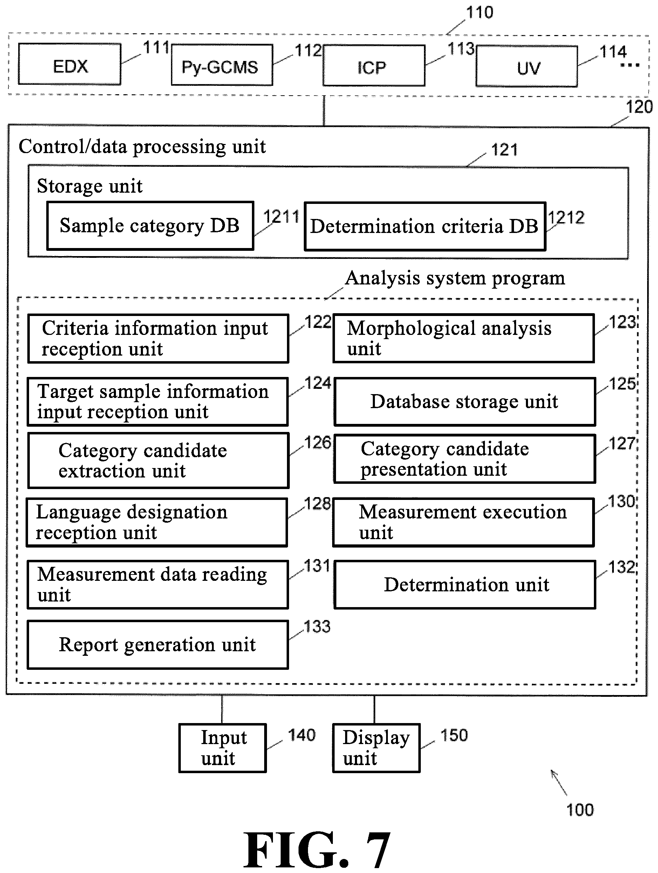

As shown in FIG. 7, the analysis system of this example is roughly composed of an analysis device group 110 (EDX 111, Py-GCMS 112, ICP 113, UV 114, etc.) and a control/data processing unit 120. The data acquired by the analysis device group 110 is sequentially stored in a storage unit 121 of the control/data processing unit 120.

In addition to the storage unit 121, the control/data processing unit 120 is provided with, as functional blocks, a criteria information input reception unit 122, a morphological analysis unit 123, a target sample information input reception unit 124, a database storage unit 125, a category candidate extraction unit 126, a category candidate presentation unit 127, a language designation reception unit 128, a measurement execution unit 130, a measurement data reading unit 131, a determination unit 132, and a report generation unit 133. Functional blocks having the same function as the sample category specifying device shown in FIG. 1 are denoted by the same reference numerals for the last two digits in FIG. 1 and the descriptions thereof will be omitted as appropriate. The entity of the control/data processing unit 120 is a personal computer, and these functional blocks are implemented by executing analysis system programs installed in the computer. An input unit 140 and a display unit 150 are connected to the control/data processing unit 120.

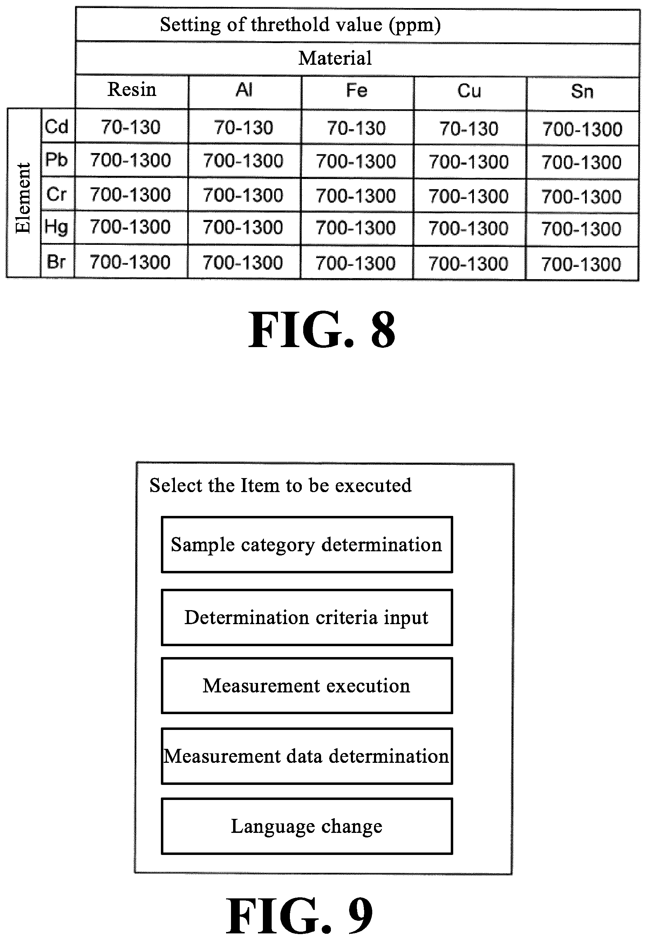

The storage unit 121 stores a determination criteria database 1212 in addition to a sample category database 1211 similar to the example described above. The determination criteria database 1212 is stored for each analysis device. For example, as the determination criteria database 1212 for the EDX 111, the one shown in FIG. 8 is stored.

As described above, the contents of Cd, Pb, Cr, Hg, and Br can be measured by the EDX 111. Therefore, threshold values corresponding to the respective elements are stored so that a sample can be easily screened and analyzed by measuring using the EDX 111. These threshold values are set for each material (base material) of the sample. This is because the detection sensitivity differs depending on the type of the material (base material) of a sample, and the detection sensitivity is higher in the order of resin, Al, Fe, Cu, and Sn, and a calibration curve corresponding to the respective detection sensitivities is used. The reason why each threshold value has a range is that a measuring error of ±30% is set.

The operation of the analysis system of this example will be described below by exemplifying the case in which the measurement for quantifying lead of a target sample is performed using the EDX **I11** and the case in which a pass or fail of the target sample is determined based on the quantitative lead data acquired by the measurement using the EDX 111.

When the user operates the analysis system program, the initial screen shown in FIG. 9 is displayed. In the initial screen, five buttons, i.e., "Sample category confirmation", "Determination criteria input", "Measurement execution", "Measurement data determination", and "Language change" are displayed. Between them, since the operation when buttons other than the "Measurement execution" and "Measurement data determination" buttons are pressed is the same as that in the above example, only the operation when the "Measurement execution" and "Measurement data determination" button are pressed will be described.

In the initial screen of FIG. 9, when a user presses the "Measurement execution" button, the measurement execution unit 130 prompts the user to select an analysis device and then an input of a measuring condition and a set of a sample to the selected analysis device. After these operations are performed by the user, when the start of measurement is instructed by a predetermined operation through the input unit 140, the measurement of a target sample and the determination of the analysis target element is performed. Since the operations related to the measurement and the quantitation are the same as those of the related art, the description of the measurement and the quantitation will be omitted here. In this example, lead (Pb) included in a target sample is quantified by selecting the EDX **I11** as an analysis device. In the quantitative determination with the EDX 111, first, the intensity ratio of the Rh-Ka ray and the Rh-Ka Compton line is obtained by preliminarily measuring the sample, and the base material closest to the strength ratio is determined. Then, the content of the element (Pb) is determined from the peak intensity of the fluorescent X-ray using a calibration curve prepared in advance for the determined base material. The measurement data thus obtained is sent to the storage unit 121 for each sample and stored.

When a user presses the "Measurement data determination" button on the initial screen, the measurement data reading unit 131 allows the user to specify the storage location of the measurement data file. When the user specifies the measurement data file, the measurement data reading unit 131 checks whether or not the target sample information, which is linguistic information including a word that characterizes the target sample is included in the measurement data file. When the target sample information is not included, the target sample information input reception unit 124 is operated to display a field for inputting target sample information on the display. This step is omitted when target sample information is input by the user, such as during the measurement execution, and the target sample information is stored with the measurement data.

When the user inputs target sample information (or when target sample information has been input), the measurement data reading unit 131 reads the target sample information specified by the user and the measurement data. In this example, although measurement data is only the quantitative values of lead, when measurement data including quantitative values of a plurality of elements is read out, the user is required to designate measurement data (here, the type of element) to be determined. Subsequently, the category candidate extraction unit 126 collates the target sample information with the key phrases of the respective categories included in the sample category database 1211. Next, the category candidate presentation unit 127 displays a predetermined number of categories on the display unit 150 based on the degree of match (FIG. 5).

Conventionally, in the screening analysis using the EDX 111, the measurement results of target elements included in the target sample were collated with a threshold value prepared in advance, and when it was less than the lower limit value, it was determined as a pass, when it is greater than the upper limit value, it was determined as a fail, and when it is a value within a width of a threshold value, it was prompted to measure with high accuracy using another device. Since the threshold value used at this time was the same regardless of the characteristics of target samples, it was troublesome to check each time whether or not the target sample was the object of exclusion rules of the RoHS Directive. In some cases, a user who is unfamiliar with the RoHS Directive overlooks the object of the exclusion rules of the RoHS Directive and mis-determines it as a fail despite that the requirements of the exclusion rule were satisfied.

In the analysis system of this example, a user is required to input information (target sample information) including a phrase that characterizes the target sample, the degree of match between the information and key phrases of each category in the sample category database 1211 is obtained, and category candidates corresponding to the target sample are displayed on the display unit 150 based on the degree of match. Therefore, the user can easily determine whether or not the target sample corresponds to the category defined in the exclusion rules of the RoHS Directive simply by checking the category candidates shown on the display unit 150.

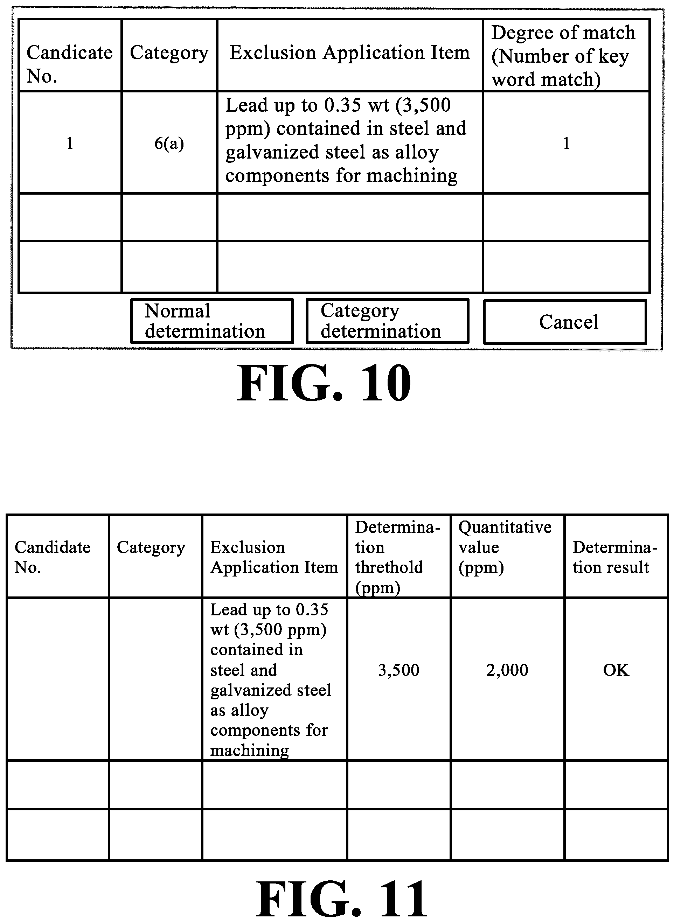

Hereinafter, in order to facilitate the description, the following description will be made by exemplifying a case in which a user inputs "galvanized steel sheet" as target sample information and only one category candidate that matches with the phrase exists (FIG. 10). The same can be applied to a case in which a plurality of category candidates exists and is displayed.

When the user confirms the category candidate displayed on the display unit 150, determines that the target sample corresponds to the category defined in the exclusion rules of the RoHS Directive, and presses the "category determination" button, the determination unit 132 extracts a term (3,500 ppm) composed of a combination of a numerical value and a predetermined unit of the physical quantity (ppm in this example) from the terms of the determination criteria of the respective category candidates, and compares the extracted the term with the quantitative value (2,000 ppm) obtained by the measurement as a determination threshold to display the determination result (OK) of a pass/fail of the target sample (FIG. 11). When there are more than one category candidate, the quantitative value of each category candidate is compared with the threshold value to indicate determination result. On the other hand, when the user determines that the target sample does not fall under the category specified in the exclusion rules of the RoHS Directive and then presses the "Normal determination" button, the determination unit 132 compares the normal determination threshold value described in Fig. 8 and the quantitative value to indicate determination result of target sample quality. Note that the unit of the physical quantity may be determined in advance as described above, or may be input at the same time when the user inputs target sample information.

Upon completion of the pass/fail determination of the target sample by the determination unit 132, the report generation unit 133 generates a report in which sample name, target sample information, and the pass/fail determination result input by the user are described in a predetermined format, displays the report on the display unit 150, and stores the report in the storage unit 121. The predetermined format may be, for example, a format required to be submitted for the manufacturers of electric and electronic equipment to be exported to the European Union to certify that the equipment meets the requirements of the RoHS Directive.

Next, an example of an analysis network system according to the present invention will be explained.

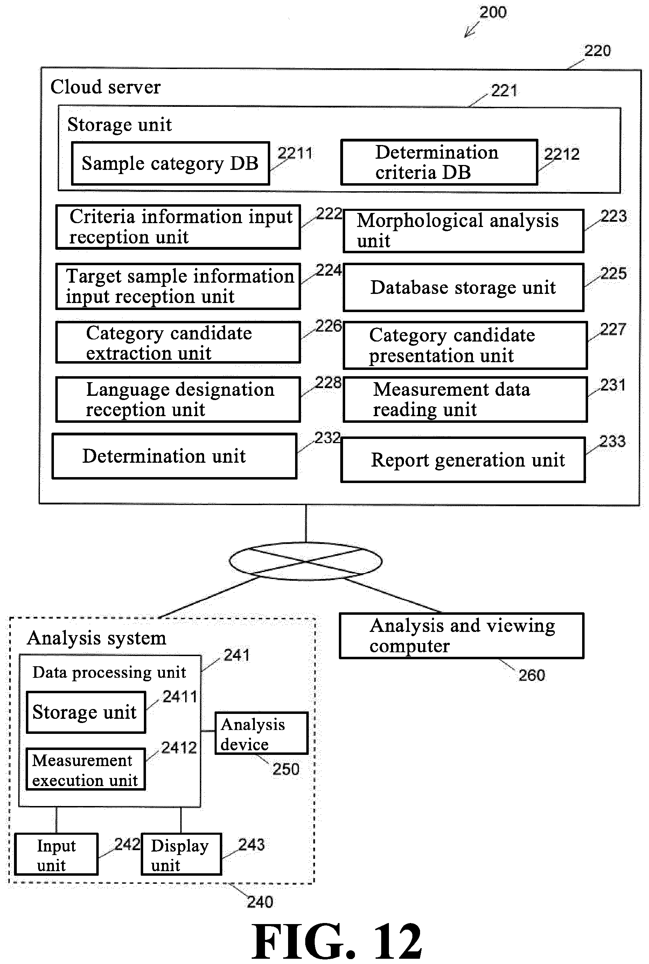

As shown in FIG. 12, the analysis network system 200 is provided with a cloud server 220 and a plurality of analysis systems 240 (only one of which is shown in FIG. 12) connectable to the cloud server 220 via a network. The analysis system is provided in analytical centers, etc., of a plurality of countries that differ in the working language. Other than the analysis system 240, a cloud server 220 can also be accessed via a network from an analysis and viewing computer 260, only one of which is shown in FIG. 12.

In addition to the storage unit 221 in which the sample category database 2211 and the determination criteria database 2212 are stored, the cloud server 220 is provided with, as functional blocks, a criteria information input reception unit 222, a morphological analysis unit 223, a target sample information input reception unit 224, a database storage unit 225, a category candidate extraction unit 226, a category candidate presentation unit 227, a language designation reception unit 228, a measurement data reading unit 231, a determination unit 232, and a report generation unit 233. That is, of the control/data processing unit 120 of the analysis system 100 of the aforementioned example, each constituent element (storage unit and each functional block) excluding the measuring unit is provided.

On the other hand, the analysis system 240 is provided with an analysis device 250 and a control/data processing unit 241 connected to the analysis device 250, and the control/data processing unit 241 is provided with a measurement execution unit 2412 as a functional block, in addition to a storage unit 2411.

In this analysis network system 200, when a user instructs to measure a target sample, the analysis device 250 is controlled by the measurement execution unit 2412 of the analysis system 240 to acquire measurement data. In this example, a user is required to input target sample information composed of the name of the target sample, the keyword that characterizes the sample, etc., prior to the start of the measures. The measurement data acquired by the analysis device 250 is sequentially stored in the storage unit 2411 of the control/data processing unit 241 together with the name and the target sample information of the target sample. The control/data processing unit 241 transfers the measurement data, etc., stored in the storage unit 2411 to the cloud server 220 in a predetermined period (for example, every day). The cloud server 220 stores the measurement data, etc., received from the plurality of analysis systems 240 in the storage unit 221 together with the identification number (ID) of the analysis system.

When the cloud server 220 is accessed from the analysis system 240 or the analysis and viewing computer 260, the respective buttons except for the "measurement execution" button in the screen shown in FIG. 9 are displayed. The operation when each button is operated is the same as that of the above-described analysis system, and therefore the detailed descriptions thereof are omitted, but each operation differs from the above-described example in that each operation is performed by the functional blocks of the cloud server 220.

Also in this analysis network system, the language can be switched to the desired language by pressing the "Language change" button in the same manner as in the above example. Thus, a single cloud server 220 can process various requests from analysis systems provided at analytical centers, etc., in a plurality of countries in which languages differ from each other. Further, even when determination criteria are input from a plurality of analysis systems 240 in different languages and the sample category database 2211 is generated, since it is translated into a language desired by the user by the language designation reception unit, the measurement data can be analyzed without problems. Further, determination criteria and measurement data input from a plurality of analysis systems are stored in the storage unit 221 of the cloud server 220, and can be accessed from any analysis system or analysis and viewing computer. Therefore, for example, it is possible to read out measurement data stored in the storage unit 221 of the cloud server 220 from the analysis and viewing computer 260 of one analysis base and obtained at the analysis center of each country, determine the pass or fail of each target sample, and generate a report for each.

The above example is an example, and can be appropriately modified in accordance with the spirit of the present invention. In the above examples, exclusion rules of the RoHS Directive have been described as an example, but various criteria, such as, e.g., an ELV (End of Life Vehicles) command and a REACH (Registration, Evaluation, Authorization and Restriction of Chemicals, can be used in the same manner. In addition to the determination of the content of hazardous substances, for example, when determining whether or not a product is acceptable by comparing measurement data obtained by sampling and analyzing a part of a product with predetermined criteria in order to confirm that the product manufactured in a factory, etc., satisfies predetermined criteria, the same configuration can be used in the operation of confirming a product corresponding to the product from among a plurality of criteria determined for each category of the product.

In the sample category determination device of the above example, an example is described by exemplifying the case in which sample category database associated with the category of the sample, the term of the determination criteria and a key phrase extracted from the term is used, but instead of the key phrase, a term extracted by a morphological analysis may be used.

Further, in the analysis system of the above example, an example is described in which the target sample is measured using the EDX **I11** as an analysis device, but the same configuration as described above can be adopted also in the case where a target sample is measured using another analysis device and in the case where the pass or fail of the target sample is determined based on its measurement data. In the analysis system of the above example, the determination unit extracts a threshold value from terms of determination criteria each time, but a threshold value may be previously associated with a sample category, etc., in the sample category database, for example.

In addition, in the analysis network system 200 of the above modification, the cloud server 220 is provided with a large number of functional blocks, and the control/data processing unit 241 of the analysis system 240 is configured to include only the measurement execution unit 2412 as a functional block, but the control/data processing unit 241 of the analysis system 240 may be configured to include a part or all of functional blocks, such as, e.g., the category candidate extraction unit 226, the category candidate presentation unit 227, the language designation reception unit 228, the measurement data reading unit 231, the determination unit 232, and the report generation unit 233. Alternatively, both the cloud server 220 and the control/data processing unit 241 of the analysis system 240 may have the above-mentioned functional blocks. Further, by providing the data processing unit 241 or the analysis and viewing computer 260 of any one analysis system 240 with the function of the cloud server 220 of the above-described example, the analysis network system 200 can be configured without using the cloud server 220.

### Description of Symbols

- 20: Data processing unit
- 21: Storage unit
- 211: Sample category database
- 22: Criteria information input reception unit
- 23: Morphological analysis unit
- 24: Target sample information input reception unit
- 25: Database storage unit
- 26: Category candidate extraction unit
- 27: Category candidate presentation unit
- 28: Language designation reception unit
- 100: Analysis system
- 110: Analysis device group
- 120: Control/data processing unit
- 121: Storage unit
- 1211: Sample category database
- 1212: Determination criteria database
- 122: Criteria information input reception unit
- 123: Morphological analysis unit
- 124: Target sample information input reception unit
- 125: Database storage unit
- 126: Category candidate extraction unit
- 127: Category candidate presentation unit
- 128: Language designation reception unit
- 130: Measurement execution unit
- 131: Measurement data reading unit
- 132: Determination unit
- 133: Report generation unit
- 200: Analysis network system
- 220: Cloud server
- 221: Storage unit
- 2211: Sample category database
- 2212: Determination criteria database
- 222: Criteria information input reception unit
- 223: Morphological analysis unit
- 224: Target sample information input reception unit
- 225: Database storage unit
- 226: Category candidate extraction unit
- 227: Category candidate presentation unit
- 228: Language designation reception unit
- 232: Determination unit
- 233: Report generation unit
- 240: Analysis system
- 241: Control/data processing unit
- 2411: Storage unit
- 2412: Measurement execution unit
- 250: Analysis device
- 260: Analysis and viewing computer

## Claims

1. A sample category identification device used to identify a category to which a target sample belongs from among a plurality of categories for classifying a sample, criteria being set for each of the plurality of categories, the sample category identification device comprising:
a) a storage unit configured to store a database in which one or a plurality of terms related to criteria determined in advance for each of the plurality of categories are associated with each of the plurality of categories;
b) a target sample information input reception unit configured to receive an input of target sample information which is linguistic information including a term that characterizes the target sample;
c) a category candidate extraction unit configured to compare the term included in the target sample information with the one or a plurality of terms corresponding to each of the plurality of categories to extract candidates of categories to which the target sample belongs from among the plurality of categories based on a degree of match; and
d) a category candidate presentation unit configured to present extracted category candidates to a user.

2. The sample category identification device as recited in claim 1, further comprising:
e) a criteria information input reception unit configured to receive an input of criteria information which is linguistic information in which predetermined criteria are described for one category;
f) a morphological analysis unit configured to extract one or a plurality of terms from the criteria information by performing a morpheme analysis of the criteria information; and
g) a database storage unit configured to store the extracted one or plurality of terms associated with the one category in the database.

3. The sample category identification device as recited in claim 2,
wherein the morphological analysis unit extracts only a noun and a verb from the criteria information.

4. The sample category identification device as recited in claim 2,
wherein the morphological analysis unit extracts a key phrase from the criteria information.

5. The sample category identification device as recited in claim 4,
wherein the morphological analysis unit extracts a term composed of a combination of a numeric value, a unit of a physical quantity, and a predetermined term showing a magnitude relationship to the numeric value, included in the key phrase, and generates a formula based on them, and
wherein the database generation unit generates a database by associating the formula with the one category.

6. An analysis system comprising:
in addition to the units of the sample category identification device as recited in claim 1,
h) a measurement data reading unit configured to read measurement data by receiving an input of measurement data of a target sample; and
i) a determination unit configured to determine a pass or fail of the target sample by extracting a term of a combination of a numeric value and a predetermined unit of a physical quantity from one or a plurality of terms related to the predetermined criteria as a threshold value and comparing the physical quantity included in the measurement data with the threshold value, for each category candidate extracted by the category candidate extraction unit.

7. The analysis network system equipped with a core computer and one or a plurality of terminal computers connectable to the core computer via a network, the analysis network system comprising:
a) a storage unit provided in the core computer, the storage unit storing a database in which one or a plurality of words related to predetermined criteria for the category are associated with each of the plurality of categories;
b) a target sample information input reception unit provided in the core computer and/or the terminal computer, the target sample information input reception unit being configured to receive an input of target sample information which is linguistic information including a word that characterizes a target sample;
c) a category candidate extraction unit provided in the core computer and/or the terminal computer, the category candidate extraction unit being configured to compare a term included in the target sample information with the one or a plurality of terms corresponding to each of the plurality of categories to extract candidates of categories to which the target sample belongs from among the plurality of categories based on a degree of match; and
d) a category candidate presentation unit provided in the core computer and/or the terminal computer to present the extracted candidates to a user.
